# EUROPEAN PATENT SPECIFICATION

(11) **EP 2 261 495 B1**
(45) Date of publication and mention of the grant of the patent: **18.01.2012**
(21) Application number: 09425221.0
(22) Date of filing: 03.06.2009
(51) Int. Cl.: F02M 35/16, B60K 13/02, B60K 13/06

(54) **Duct system for the incoming air to the air filter of a vehicle's engine, especially industrial or commercial vehicle**
Leitungssystem für in den Luftfilter eintretende Luft eines Fahrzeugmotors, insbesondere eines Industrie- oder Nutzfahrzeugs
Système de conduits pour l'air entrant au filtre d'air du moteur d'un véhicule, en particulier un véhicule industriel ou commercial

(43) Date of publication of application: 15.12.2010
(73) Proprietor: Iveco S.p.A., 10156 Torino (IT)
(72) Inventor: Esposito, Andrea Carmine, 10144 Torino (IT)
(74) Representative: Borsano, Corrado

(56) References cited:
- EP-A2- 0 451 916
- AT-B- 308 174
- FR-A3- 2 568 829
- US-A- 5 860 685

## Description

### Application field of the invention

The present invention refers to a duct system for the incoming air to the air filter of a vehicle's engine, especially industrial or commercial vehicle.

### Description of the prior art

There are various sources of noise in a vehicle. Among these, one source of noise has been verified and is generated by the inlet system of the so-called "dirty" air to the filter which cleans it and provides it to the engine for mixing it with the fuel, for example by means of a turbine.

More in particular, it has been verified that the amount of noise depends on the dimensions of the inlet pipe. Usually the pipe is made by a plastic hose and by flexible couplings, and its dimensions depend on the fact that there is very little space available, which results in a reduced length and section of the pipe and of the external air inlet.

A further problem is determined by the fact that the reduced dimensions of the pipe and of the air inlets cause losses in the load pressure of the incoming air, which affects the proper functioning of the whole air inlet circuit, including the filter.

FR256829 discloses a crossbar, disposed in a front part of a car, hollow-shaped having a plurality of inlet openings directed towards the engine compartment and an outlet opening connected with a filter box.

It is known in the art that, theoretically, a remarkable decrease of noise and of load pressure losses can be obtained by means of an air inlet pipe having approximately the same length as the air outlet pipe from the filter to the engine, and which has an external air inlet with the same section area as the internal air inlet towards the filter. The problem remains unsolved, however, for the systems known, which cannot have these dimensions because of the lack of available space.

### Summary of the invention

Therefore the aim of the present invention is to provide a duct system for the incoming air to the air filter of a vehicle's engine, especially industrial or commercial vehicles, suitable to overcome all the drawbacks mentioned above.

The subject of the present invention is a duct system for the incoming air to the air filter of a vehicle's engine, especially industrial or commercial vehicle, according to claim 1.

In particular the subject of the present invention is a duct system of the incoming air to the air filter of a vehicle's engine, especially industrial or commercial vehicle, as described more fully in the claims, which are an integral part of this description.

### Brief description of the Figures

Further purposes and advantages of this invention will become clear from the following detailed description of a preferred embodiment and from the drawings that are attached hereto that are merely illustrative and not limitative, in which:

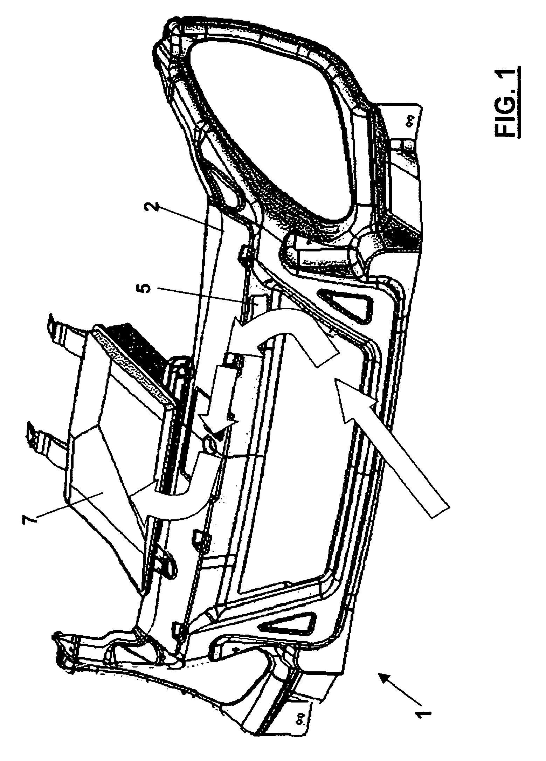

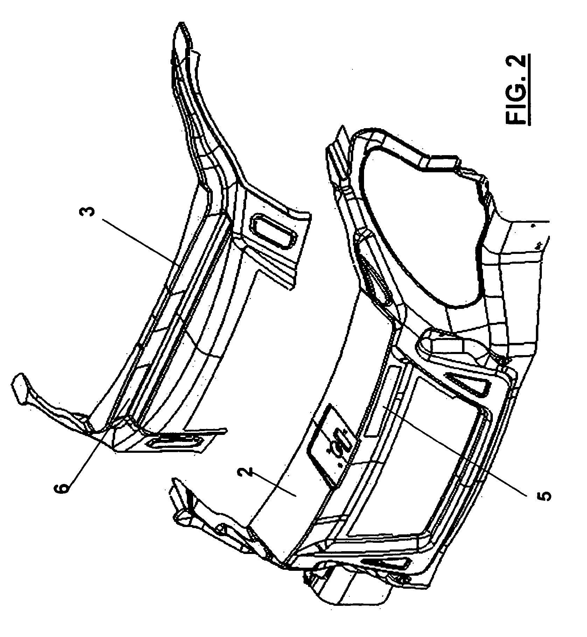

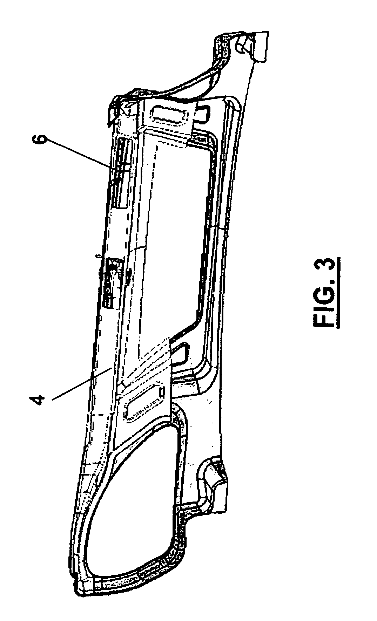

figures 1, 2 and 3 show different views of the air duct system that is subject of the present invention, respectively, front assembled view, front exploded view, and rear assembled view.

In the drawings the same reference numbers and letters are used to identify the same elements or components.

### Detailed description of preferred embodiments of the invention

According to the present invention, it is possible to completely remove the air inlet pipe, comprising at least a rubber or plastic hose and its relative couplings, and to realize a duct system which exploits the front part of the cabin, usually made of plate, where a plate or steel section is integrated, for example by means of welding, with its transversal channel facing the internal part, to the internal part of the front part of the cabin, so that the overall shape of the front part, together with the shape of the plate, forms an air pipe, substantially closed lengthwise.

More in particular, with reference to the figures, the front part of the cabin 1, so-called "front-end", whose main function is to support the headlights, the lock of the front hood and the radiator grill, has this additional function of air inlet pipe.

It comprises an external transversal protrusion 2, inside which a metallic section 3 is integrated, which has an internal protrusion complementary to that external transversal protrusion, in order to obtain a transversal pipe 4 directly integrated in the front-end. An air inlet shot 5 is made in one side of the front part. In the opposite internal side, a second slot 6, for letting the air flow towards the filter 7, is made.

The air comes in from the front slot 5 (see the direction of the arrows in fig. 1), from the opposite side with respect to the air inlet towards the filter, it transversally passes through the whole front-end, and comes out from the slot 6 in the rear part, directly connected to the filter box 7.

The external slot 5 has the same area as the rear slot 6 for the air inlet to the filter: the dimensions of the slots and the canalization both in length and in section does not have particular constraint for being used for this purpose, therefore it is possible to obtain optimal values in terms of reduction of noise and of load pressure losses, due in the system known to the small air inlet surface and to the limited length of the pipe. Therefore it is also possible to respect the law requirements in terms of admissible load pressure losses between the air inlet from the outside and the internal air outlet towards the filter.

Therefore the duct is integrated in the front part, also using raw plate. No particular vibration or resonance has been found. Thus it is possible to completely remove the rubber hoses, with evident further advantages in terms of cost and dimension reduction.

It will be apparent to the person skilled in the art that other alternative and equivalent embodiments of the invention can be conceived and reduced to practice.

From the description set forth above it will be possible for the person skilled in the art to embody the invention with no need of describing further construction details.

## Claims

1. Duct system for the incoming air to the air filter of a vehicle's engine, especially industrial or commercial vehicle, comprising a transversal pipe (4) obtained by:
- a front part of the vehicle's cabin, so-called front-end, conformed to support the headlights, the lock of the front hood and the radiator grill comprising an external transversal protrusion (2);
- a metallic section (3) having an internal protrusion complementary to said external transversal protrusion.

2. Duct system as in claim 1, further comprising a first slot (5) in one of the external sides of said front part of the cabin, for the air inlet; and a second slot (6) in the opposite side of said front part, inside said metallic section (3) for the air outlet towards the filter.

3. Duct system as in the claim 1 or 2, wherein the length of the duct system is substantially the same as the length of a air outlet pipe from the filter towards the vehicle's engine, and wherein the dimensions of said first (5) and second slot (6) are substantially the same.

## Patentansprüche

1. Führungssystem für die eintretende Luft für den Luftfilter eines Motors eines Fahrzeugs, insbesondere eines industriellen oder kommerziellen Fahrzeugs, umfassend ein quer verlaufendes Rohr (4), das erhalten wird durch:
- einen vorderen Teil der Kabine des Fahrzeugs, der als Front-End bezeichnet wird und ausgebildet ist, um die Scheinwerfer, die Verriegelung der vorderen Kühlerhaube und den Kühlergrill zu tragen, und der einen äußeren quer verlaufenden Vorsprung (2) aufweist;
- einen metallischen Abschnitt (3) mit einem inneren Vorsprung, der zu dem äußeren quer verlaufenden Vorsprung komplementär ist.

2. Führungssystem nach Anspruch 1,
das ferner einen ersten Schlitz (5) in einer der äußeren Seiten des vorderen Teils der Kabine für den Lufteinlass aufweist; und einen zweiten Schlitz (6) in der entgegengesetzten Seite des vorderen Teils im Inneren des metallischen Abschnitts (3) für den Luftauslass in Richtung des Filters.

3. Führungssystem nach Anspruch 1 oder 2,
wobei die Länge des Führungssystems im Wesentlichen die gleiche ist wie die Länge eines Luftauslassrohrs von dem Filter in Richtung des Motors des Fahrzeugs und wobei die Abmessungen des ersten (5) des zweiten Schlitzes (6) im Wesentlichen gleich sind.

## Revendications

1. Système de conduite pour l'air entrant du filtre à air du moteur d'un véhicule, en particulier un véhicule industriel ou commercial, comprenant un tuyau transversal (4) obtenu pat :
- une partie avant de l'habitacle du véhicule, appelée extrémité avant, conformée pour supporter les phares, le verrou du capot avant et la grille de radiateur comprenant une saillie transversale externe (2) ;
- une section métallique (3) comportant une saillie interne complémentaire de ladite saillie transversale externe.

2. Système de conduite selon la revendication 1, comprenant en outre une première fente (5) dans un des côtés externes de ladite partie avant de l'habitacle, pour l'entrée d'air ; et une seconde fente (6) dans le côté opposé de ladite partie avant, à l'intérieur de ladite section métallique (3) pour la sortie d'air vers le filtre.

3. Système de conduite selon la revendication 1 ou 2, dans lequel la longueur du système de conduite est sensiblement la même que la longueur d'un tuyau de sortie d'air à partir du filtre vers le moteur du véhicule, et dans lequel les dimensions desdites première (5) et seconde (6) fentes sont sensiblement identiques.
